# EUROPÄISCHE PATENTANMELDUNG

(11) **EP 4 674 733 A1**
(43) Veröffentlichungstag der Anmeldung: **07.01.2026**
(21) Anmeldenummer: 25185545.8
(22) Anmeldetag: 26.06.2025
(51) Int. Cl.: B62D 25/08, B62D 25/14, B62D 25/20, B62D 27/06, B62D 29/00

(54) **KRAFTFAHRZEUG UND VERFAHREN ZUM HERSTELLEN EINES KRAFTFAHRZEUGS**

(30) Priorität: 01.07.2024 DE 102024206135
(71) Anmelder: VOLKSWAGEN AG, 38440 Wolfsburg (DE)
(72) Erfinder: FROMMHOLZ, Dirk, 38518 Gifhorn (DE)

(57) **Zusammenfassung**

Offenbart ist ein Kraftfahrzeug (1), das eine Stirnwand (3) aufweist, die einen Fahrgastraum (4) nach vorne begrenzt, wobei die Stirnwand (3) mehrere Wandelemente (6a, 6b) umfasst, wobei ein erstes Wandelement (6a) ein Cockpitmodul (7) für den Fahrgastraum (4) trägt und ein zweites Wandelement (6b) mit dem ersten Wandelement (6a) verbunden ist. Das erste Wandelement (6a) ist aus einer Richtung von oben, bezogen auf das Kraftfahrzeug (1), auf das zweite Wandelement (6b) der Stirnwand (3) aufgestapelt.

Weiter ist ein Verfahren zum Herstellen eines Kraftfahrzeugs (1) offenbart, umfassend den Schritt Montieren (S41, S51) eines Cockpitmoduls (7) auf ein Fahrgestell (2) des Kraftfahrzeugs (1). Der Schritt des Montierens (S41, S51) umfasst den Unterschritt Aufstapeln (S411, S511) eines ersten Wandelements (6a), das das Cockpitmodul (7) trägt, auf ein zweites Wandelement (6b), das auf dem Fahrgestell (2) des Kraftfahrzeugs (1) bereitgestellt ist, aus einer Richtung von oben, bezogen auf das Kraftfahrzeug (1), um eine Stirnwand (3) in dem Kraftfahrzeug (1) zu bilden, die den Fahrgastraum (4) des Kraftfahrzeugs (1) nach vorne begrenzt.

## Beschreibung

Die Erfindung betrifft ein Kraftfahrzeug, das eine Stirnwand aufweist, die einen Fahrgastraum nach vorne begrenzt, wobei die Stirnwand mehrere Wandelemente umfasst, wobei ein erstes Wandelement ein Cockpitmodul für den Fahrgastraum trägt und ein zweites Wandelement mit dem ersten Wandelement verbunden ist.

Weiter betrifft die Erfindung ein Verfahren zum Herstellen eines Kraftfahrzeugs, umfassend Montieren eines Cockpitmoduls auf ein Fahrgestell des Kraftfahrzeugs.

Bei der Montage von Cockpits in Kraftfahrzeuge wird üblicherweise ein vormontierter Groß-Zusammenbau (ZSB) mit einem Manipulator durch einen Türausschnitt, auch als X-Flansch bekannt, in eine bereitgestellte Karosserie des Kraftfahrzeugs eingefahren und anschließend auf beengtem Raum in einer X-Richtung montiert. Die Begrenzung des Groß-ZSBs basiert auf den Türausschnitten, durch die der ZSB inkl. Manipulator, der beispielhaft ein elektrisch angetriebener Haltearm mit diversen Montagen und Ausrichtungsfunktionen sein kann, hindurch muss. Viele Pkw-Hersteller nutzen diesen Weg, um das Cockpit in das Kraftfahrzeug zu bringen. Im LKW-Bau sind Montagen von vorne bekannt, wobei anschließend die Front des LKWs eingebaut wird. Weiterhin weist die Karosserie des Kraftfahrzeugs in der Regel eine zusammengeschweißte geschlossene Stahlstruktur mit begrenztem Bewegungsfreiraum für Montagen auf.

Diese bekannte Art der Montage von Cockpits kann eine lange Montagezeit und einen begrenzten ZSB-Umfang des Cockpitmoduls durch begrenzten Bauraum mit sich bringen. Somit ist üblicherweise viel vor- und nachgelagerte Montage erforderlich, wie etwa Leitungsstränge durch separate Löcher in der Stirnwand zu führen.

Aus dem Stand der Technik sind hinsichtlich Stirnwänden in Kraftfahrzeugen beispielsweise die DE 31 49 083 C2, die DE 33 15 646 C2 und die EP 1 055 587 B1 bekannt. Die DE 31 49 083 C2 zeigt und beschreibt eine vormontierte Baueinheit für den Cockpit-Bereich von Fahrzeugen, die Durchtritte für Bowdenzüge und Kabelsätze aufweist. Die DE 33 15 646 C2 lehrt eine Stirnwand, an der diverse Aggregate im eingebauten Zustand verbunden sind. Ein Stirnwandquerträger ist mit seitlich angrenzenden Karosseriewänden dichtend verbindbar. In der EP 1 055 587 B1 ist eine mehrteilige Stirnwand für eine Kraftfahrzeugrohbaukarosserie offenbart. Zwei in Fahrzeugquerrichtung benachbarte Stirnwandteile sind über Anschlussflansche miteinander verbunden. Die Anschlussflansche weisen Schiebeebenen auf, die im Wesentlichen senkrecht zu einer Fahrzeuglängsrichtung angeordnet sind.

Es ist die Aufgabe der Erfindung, ein Kraftfahrzeug und ein Verfahren zum Herstellen eines Kraftfahrzeugs bereitzustellen, die gegenüber dem Stand der Technik verbessert sind.

Die voranstehende Aufgabe wird gelöst durch das Kraftfahrzeug mit den Merkmalen des unabhängigen Patentanspruchs 1 und durch das Verfahren zum Herstellen eines Kraftfahrzeugs mit den Merkmalen des unabhängigen Patentanspruchs 9. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Kraftfahrzeug beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Erfindungsgemäß ist bei dem Kraftfahrzeug das erste Wandelement aus einer Richtung von oben, bezogen auf das Kraftfahrzeug, auf das zweite Wandelement der Stirnwand aufgestapelt.

Die vorgeschlagene Lösung hat den Vorteil, dass durch das Aufstapeln von oben die Schwerkraft zum Aufstapeln des ersten Wandelements mitgenutzt werden kann. Ein Manipulator, wie etwa ein Roboter, kann auch sehr schwere oder große erste Wandelemente, die das Cockpitmodul tragen, aus der Richtung von oben aufstapeln. Das erste Wandelement kann zunächst von oben auf dem zweiten Wandelement abgesetzt werden, bevor weitere Montageschritte erfolgen, was die Montage vereinfacht. Das erste Wandelement und das zweite Wandelement sind in Folge dessen vertikal benachbart angeordnet.

Der Fahrgastraum kann auch als Kraftfahrzeuginnenraum oder Fahrgastzelle bezeichnet werden. Der Begriff Stirnwand kann in dieser Schrift synonym zu Spritzwand verstanden werden. Die Richtungsangaben in dieser Schrift beziehen sich auf das Kraftfahrzeug in einer Position während seiner üblichen Verwendung. Der Begriff "von oben" bedeutet auf den Untergrund zu, auf dem das Kraftfahrzeug steht, während zum Beispiel "vorne" sich auf die übliche Fahrtrichtung des Kraftfahrzeugs bezieht, in die Scheinwerfer des Kraftfahrzeugs gerichtet sind. "Hinten" ist entsprechend die Richtung, in die die Bremsleuchten des Kraftfahrzeugs weisen. Eine Längsrichtung des Kraftfahrzeugs, die sich in dem Kraftfahrzeug nach vorne und hinten erstreckt, ist als X-Richtung definiert. Eine Richtung nach oben und unten ist als Z-Richtung definiert. Eine Richtung senkrecht zu der X-Richtung und zu der Z-Richtung, also eine seitliche Richtung oder Querrichtung des Kraftfahrzeugs, ist als Y-Richtung definiert. Der Begriff "von oben" kann dabei senkrecht von oben oder parallel zu der Z-Richtung bedeuten, ist aber nicht unbedingt darauf beschränkt. Man kann "von oben" auch so verstehen, dass eine allgemeine Bewegungsrichtung beim Aufstapeln des ersten Wandelements gerade auf den Untergrund zu gerichtet ist, aber trotzdem noch zeitweise eine Bewegung senkrecht zu der Z-Richtung zulässig ist, wie etwa um das erste Wandelement passender über dem zweiten Wandelement zu positionieren.

Das Cockpitmodul kann eines oder mehrere umfassen von einem Armaturenbrett, einem Klimabauteil, einer Pedalbaugruppe, einem Gangschalthebel, einem Lenkrad und einer Lenkstange. Grundsätzlich kann das Cockpitmodul sämtliche Elemente umfassen, die man vor einem Fahrer des Kraftfahrzeugs im Fahrgastraum positionieren möchte. In Ausführungsformen kann das erste Wandelement zusätzlich zu dem Cockpitmodul weitere Komponenten tragen, wie etwa solche, die bisher in einem Motorraum des Kraftfahrzeugs an der Stirnwand, üblicherweise in X-Richtung, montiert werden, zum Beispiel einen Bremskraftverstärker, ein Scheibenwischersystem, Steuergeräte, Wärmeschutzbleche, etc. Auch diese Komponenten können dann gemeinsam mit dem ersten Wandelement auf das zweite Wandelement und somit auf das Fahrgestell aus der Richtung von oben, also von oben her, entlang der Z-Richtung oder vertikal, aufgestapelt werden.

Manche Ausführungsformen sehen vor, dass das Kraftfahrzeug mindestens einen vorderen Seitentürausschnitt aufweist, wobei das erste Wandelement, das das Cockpitmodul trägt, derart bemessen ist, dass der vordere Seitentürausschnitt ein Einbringen des ersten Wandelements, das das Cockpitmodul trägt, durch den vorderen Seitentürausschnitt in den Fahrgastraum beim Herstellen des Kraftfahrzeugs verhindert. Dies erfordert zwar eine andere Lösung, als das erste Wandelement, das das Cockpitmodul trägt, durch den X-Flansch bzw. den vorderen Seitentürausschnitt in den Fahrgastraum einzubringen, dafür ist dann aber die maximale Größe des ersten Wandelements, an dem das Cockpitmodul angebracht ist, nicht länger durch die Größe des vorderen Seitentürausschnitts beschränkt. Wie eingangs erläutert, muss nicht unbedingt das erste Wandelement mit dem Cockpitmodul alleine schon größer bemessen sein als der vordere Seitentürausschnitt, um die Montage durch den X-Flansch unmöglich zu machen. Wenn ein Roboterarm, der zusammen mit dem ersten Wandelement, das das Cockpitmodul trägt, ebenfalls durch den ersten Seitentürausschnitt geführt würden müsste und dies aufgrund der Größe des ersten Wandelements, das das Cockpitmodul trägt, unmöglich wäre, würde dies ebenfalls bedeuten, dass das erste Wandelement, das das Cockpitmodul trägt, derart bemessen ist, dass der vordere Seitentürausschnitt ein Einbringen des ersten Wandelements, das das Cockpitmodul trägt, durch den vorderen Seitentürausschnitt in den Fahrgastraum beim Herstellen des Kraftfahrzeugs verhindert. Eine mögliche Lösung zum Herstellen des Kraftfahrzeugs, wenn das erste Wandelement, das das Cockpitmodul trägt, derart bemessen ist, dass der vordere Seitentürausschnitt ein Einbringen des ersten Wandelements, das das Cockpitmodul trägt, durch den vorderen Seitentürausschnitt in den Fahrgastraum beim Herstellen des Kraftfahrzeugs verhindert, ist anhand des Verfahrens in dieser Schrift beschrieben.

In manchen Ausführungsformen ist das Kraftfahrzeug derart eingerichtet, dass eine Demontagerichtung des Cockpitmoduls oder von Komponenten des Cockpitmoduls in die X-Richtung vorgesehen ist. So kann das Cockpitmodul oder Komponenten davon, z. B. im Falle eines Schadens, in die X-Richtung von dem ersten Wandelement entfernt werden und muss nicht mit dem gesamten ersten Wandelement in Z-Richtung aus dem Kraftfahrzeug gehoben werden. Das ist insofern vorteilhaft, als dass nicht alle Komponenten, die mit dem Cockpitmodul an dem ersten Wandelement montiert sind, derart bemessen sind, dass der vordere Seitentürausschnitt ein Entfernen dieser Komponenten aus dem Fahrgastraum durch den vorderen Seitentürausschnitt verhindern würde. So könnten diese Komponenten von dem Cockpitmodul gelöst und durch den vorderen Seitentürausschnitt aus dem Fahrgastraum entfernt werden. Das Cockpitmodul kann durch eine Servicebefestigung an dem ersten Wandelement befestigt sein, die ein Entfernen des Cockpitmoduls oder von Komponenten des Cockpitmoduls in die X-Richtung, als zum Heck des Kraftfahrzeugs hin, ermöglicht. Die Servicebefestigung kann eine Verschraubung, eine Steckverbindung oder allgemein eine andere Art von lösbarer Befestigung sein.

In einigen Ausführungsformen weist das erste Wandelement eine Unterkante auf und das zweite Wandelement weist eine Oberkante auf. Die Unterkante und die Oberkante weisen in Ausführungsformen jeweils einen oder mehrere Ausschnitte auf, die jeweils zueinander ausgerichtet sind, sodass die Ausschnitte der Unterkante und der Oberkante zusammen Durchgangsöffnungen durch die Stirnwand bereitstellen, die oberseitig durch das erste Wandelement und unterseitig durch das zweite Wandelement definiert sind. Das heißt, die Stirnwand kann zum Beispiel horizontal geteilt sein, sodass Einbauten, Kabel, Leitungsstränge, oder Lenksäulen-Komponenten, und / oder Bauteile einer Klimafunktion, und / oder Komponenten einer Pedalbaugruppe nicht separat durch Löcher geführt und montiert werden müssen, sondern dass das zweite Wandelement mit dem ersten Wandelement, das das Cockpitmodul trägt, gemeinsam die Durchgangsöffnungen bilden kann. Mit anderen Worten, eine Trennung zwischen dem ersten Wandelement und dem zweiten Wandelement verläuft in den Durchgangslöchern. Hieraus ergibt sich, dass diese besagten Komponenten, die die Stirnwand durchlaufen sollen, Teil des Cockpitmoduls werden können und bereits in der Vormontage parallel zu einer Kernlinie verbaubar sind. Auch andere Komponenten des Kraftfahrzeugs, wie weitere Module, können sich durch die Durchgangsöffnungen erstrecken. So kann ein großer Bauraum entlang der X-Achse des Kraftfahrzeugs bereitgestellt und genutzt sein, der nicht durch die Stirnwand unterbrochen ist. Es könnte zum Beispiel sogar ein Modul oder eine Komponente des Kraftfahrzeugs am Heck des Kraftfahrzeugs beginnen und sich bis zu einer vorderen Stoßstange erstrecken, indem sie durch eine Durchgangsöffnung durch die Stirnwand hindurch verläuft. Mindestens eine Durchgangsöffnung kann eine Abdichtung umfassen. Die Abdichtung kann als umlaufende Ringdichtung ausgeführt sein. Die Abdichtung kann einen radialen Freiraum zwischen einer Komponente, die durch die Durchgangsöffnung verläuft, und dem ersten Wandelement und dem zweiten Wandelement verschließen. So kann der Motorraum gegenüber dem Fahrgastraum abgedichtet sein, selbst wenn die Stirnwand Durchgangsöffnungen aufweist. Die Durchgangsöffnung kann beispielsweise für einen Mitteltunnel gebildet sein. Der Mitteltunnel kann in einem zentralen Bereich der Stirnwand angeordnet sein. In Ausführungsformen schließt mindestens eines von der Oberkante und der Unterkante ein Abschnitt der Stirnwand an, der sich entlang der Z-Richtung erstreckt, insbesondere senkrecht zu dem Fahrgestell.

In Ausführungsformen stellt das erste Wandelement einen ersten Verbindungsabschnitt bereit und das zweite Wandelement stellt einen zweiten Verbindungsabschnitt bereit. Der erste Verbindungsabschnitt umgibt vorzugsweise den zweiten Verbindungsabschnitt ausgehend von dem ersten Wandelement sandwichartig. In Ausführungsformen umgibt der erste Verbindungsabschnitt den zweiten Verbindungsabschnitt sandwichartig aus der Z-Richtung kommend, also von oben kommend. Der erste Verbindungsabschnitt kann vorzugsweise als Nut gebildet sein. Der zweite Verbindungsabschnitt kann vorzugsweise eine Feder aufweisen, um in die Nut einzugreifen. Im gestapelten Zustand kann dann der erste Verbindungsabschnitt von oben gesehen wasserabweisend wirken. So kann eine Verbindung zwischen dem ersten Wandelement und dem zweiten Wandelement als Nut/Feder-System gebildet sein, was eine stabile Steckverbindung ermöglicht. Die Nut kann Einführschrägungen aufweisen, um das Aufstapeln zu vereinfachen. So können zudem hohe Steifigkeitswerte dieser gesteckten Stirnwand erzielt werden. Nach der Steckung, also dem Aufstapeln der Nut auf die Feder, können in Ausführungsformen das erste Wandelement und das zweite Wandelement "verriegelt" werden. Hierzu bieten sich insbesondere geeignete Verschraubungen an, wie nachstehend erläutert.

Das erste Wandelement und das zweite Wandelement sind in einigen Ausführungsformen aus der Richtung von oben miteinander verschraubt. Zum Beispiel kann an dem zweiten Wandelement ein Flansch bereitgestellt sein, wie etwa an dem zweiten Verbindungsabschnitt, der ein oder mehrere Schraubenaufnahmen aufweist. Der Flansch kann senkrecht zu der Feder angeordnet sein. Das erste Wandelement kann in dem ersten Verbindungsabschnitt Schraubendurchgangslöcher aufweisen, in denen Schrauben angeordnet sind, die in die Schraubenaufnahmen eingeschraubt sind. Die Schrauben, insbesondere zylinderförmige Gewindeschäfte der Schrauben, erstrecken sich vorzugsweise entlang der Z-Richtung. Köpfe der Schrauben können an dem ersten Verbindungsabschnitt in Z-Richtung nach unten einen Druck ausüben, um den ersten Verbindungsabschnitt von oben gegen den Flansch des zweiten Verbindungsabschnitts zu drücken. So kann nicht nur das Aufstapeln in Z-Richtung erfolgen, sondern auch das Verschrauben des ersten Wandelements an dem zweiten Wandelement. Eine Selbstverkeilung des ersten Wandelements und des zweiten Wandelements kann alternativ oder zusätzlich vorgesehen sein und könnte dem System weitere Festigkeit bringen.

Die Stirnwand ist in manchen Ausführungsformen als Domstrebe für eine Federbeinaufnahme des Kraftfahrzeugs eingerichtet. Zum Beispiel kann das erste Wandelement oder das zweite Wandelement die Federbeinaufnahme aufweisen. Da die Stirnwand ein sehr stabiles Kraftfahrzeugteil sein kann, kann sie vorteilhaft als zusätzliche Funktion Federbeine von Rädern des Kraftfahrzeugs aufnehmen.

In einigen Ausführungsformen stellt die Stirnwand eine Verstärkung von mindestens einer A-Säule des Kraftfahrzeugs bereit. Vorzugsweise ist die Stirnwand, insbesondere das erste Wandelement, dazu angeordnet, eine Abstützung der A-Säule in der Y-Richtung bereitzustellen. Da die Stirnwand ein sehr stabiles Kraftfahrzeugteil sein kann, kann sie zusätzlich eine Stützfunktion für eine oder mehrere A-Säulen des Kraftfahrzeugs übernehmen. Zum Beispiel kann ein lateraler Endabschnitt der Stirnwand, der eine Stütze bildet, in die A-Säule eingreifen, wie etwa in einem 90° Winkel zu der Y-Richtung. Der laterale Endabschnitt kann vorzugsweise in X-Richtung nach hinten weisen, während sich ein Hauptteil des ersten Wandelements in die Y-Richtung erstreckt. Der Hauptteil ist der Abschnitt zwischen den beiden lateralen Endabschnitten der Stirnwand. So kann der A-Säule eine vergrößerte Anlagefläche an der Stirnwand bereitgestellt sein, um die A-Säule zu stabilisieren. Die Stütze kann eine Stufe aufweisen, um sich geometrisch mit der A-Säule zu verblocken. Weiter ist es denkbar, den einen Modulquerträger des Cockpits mindestens teilweise durch das erste Wandelement, also das Oberteil der Stirnwand, zu ersetzen. Die Steifigkeit des Cockpits kann in Großteilen durch die Stirnwand, die als Spritzgussteil bereitgestellt sein kann, übernommen werden.

Die Stirnwand ist in manchen Ausführungsformen als Aluminiumgroßguss gefertigt. So können Effizienzen in den Herstellungszeiten gewonnen werden und zudem kann die Stirnwand relativ leicht ausgeführt werden. Alternativ kann die Stirnwand aus Stahlblech gefertigt sein. Stahlblech kann stabil und leicht formbar sein. Alternativ kann die Stirnwand ein Hybrid aus Kunststoff und Blech sein. So kann ebenfalls eine relativ leichte Stirnwand erhalten werden, die dennoch stabil ist. Insbesondere kann das obere Wandelement als Aluminiumgroßguss gefertigt sein, da dieses auf das zweite Wandelement bei der Herstellung des Kraftfahrzeugs aufgestapelt werden muss, sodass ein relativ geringes Gewicht durch das Aluminium vorteilhaft ist. Das erste Wandelement kann im Wesentlichen, also zu großen Teilen, als flache Platte ausgeführt sein. Das zweite Wandelement kann im Wesentlichen als flache Platte ausgeführt sein. Mindestens der Hauptteil des ersten Wandelements kann als flache Platte ausgeführt sein. Dies vereinfacht die Herstellung. Das zweite Wandelement kann auf das Fahrgestell aufgestapelt sein. Das zweite Wandelement kann mit dem Fahrgestell integral sein. Das zweite Wandelement kann von dem Fahrgestell separat hergestellt sein und mit dem Fahrgestell lösbar, wie etwa verschraubt, oder alternativ unlösbar, wie etwa verschweißt, verbunden sein.

Ein bevorzugtes Kraftfahrzeug ist ein bereiftes Kraftfahrzeug. Es kann sich um ein Kraftfahrzeug mit Verbrennungsmotor und / oder Elektromotor handeln. Es kann sich um ein 1-, 2-, 3-, 4-, 5- oder 6-sitziges Kraftfahrzeug handeln.

Weiter wird die Aufgabe der Erfindung, ein Verfahren der eingangs genannten Art bereitzustellen, das gegenüber dem Stand der Technik verbessert ist, gelöst durch das Verfahren nach Anspruch 9, wie im Folgenden beschrieben.

Erfindungsgemäß ist bei dem Verfahren vorgesehen, dass der Schritt des Montierens den Unterschritt Aufstapeln eines ersten Wandelements, das das Cockpitmodul trägt, auf ein zweites Wandelement, das auf dem Fahrgestell des Kraftfahrzeugs bereitgestellt ist, aus einer Richtung von oben, bezogen auf das Kraftfahrzeug, um eine Stirnwand in dem Kraftfahrzeug zu bilden, die den Fahrgastraum des Kraftfahrzeugs nach vorne begrenzt, umfasst.

Die vorgeschlagene Lösung hat den Vorteil, dass durch das Aufstapeln von oben die Schwerkraft zum Aufstapeln des ersten Wandelements mitgenutzt werden kann. Ein Manipulator, wie etwa ein Roboter, kann auch sehr schwere oder große erste Wandelemente, die das Cockpitmodul tragen, aus der Richtung von oben aufstapeln. Das erste Wandelement kann, anders als bei der Montage aus einer X-Richtung, zuerst von oben auf dem zweiten Wandelement abgesetzt werden, bevor weitere Montageschritte erfolgen, was die Montage vereinfacht.

Montieren des Cockpitmoduls auf das Fahrgestell ist hier so zu verstehen, dass das Cockpitmodul mit dem Fahrgestell "verheiratet" wird. Das Cockpitmodul wird also vorzugsweise zunächst aus einer Vielzahl von Komponenten gebildet, dann mit dem ersten Wandelement verbunden und schließlich auf das zweite Wandelement vertikal entlang der Z-Richtung aufgesetzt. Das Montieren kann erfolgen, während sich das Fahrgestell auf einer Montagestraße vorwärtsbewegt, zum Beispiel rollt.

In manchen Ausführungsformen umfasst das Verfahren nach dem Schritt des Montierens des Cockpitmoduls den Schritt des Bereitstellens eines vorderen Seitentürausschnitts des Kraftfahrzeugs auf dem Fahrgestell. Der Seitentürausschnitt wird also erst bereitgestellt, sobald das Cockpitmodul zusammen mit dem ersten Wandelement auf dem zweiten Wandelement und damit auf dem Fahrgestell aufgestapelt ist. Somit bestimmt die Größe des vorderen Seitentürausschnitts nicht länger die maximale Abmessung des Cockpitmoduls. Ohne eine "geöffnete" Karosserie bietet sich nur eine X-Montage der Stirnwand an, sodass der Cockpitmodulinhalt dann kleiner sein muss. Es werden also Cockpitmodulgrößen ermöglicht, die bisher aufgrund der erforderlichen Montage durch den relativ kleinen vorderen Seitentürausschnitt hindurch ausgeschlossen waren. Eine Montagereihenfolge Cockpithochzeit, also Aufstapeln des ersten Wandelements, das das Cockpitmodul trägt, auf das zweite Wandelement von oben, vor einem Schritt eines Montierens von Antrieb und Fahrwerk des Kraftfahrzeugs ist in manchen Ausführungsformen vorgesehen. So könnte die Montagezeit des Kraftfahrzeugs möglicherweise noch weiter verkürzt werden, denn die Erreichbarkeit der Komponenten und des Cockpitmoduls bei der Montage könnte so noch besser sein.

Ausführungsformen des Verfahrens sehen nach dem Aufstapeln ein Verschrauben des ersten Wandelements mit dem zweiten Wandelement aus der Richtung von oben vor. So kann für beide Schritte dieselbe Arbeitsrichtung genutzt werden, was effizienter und schneller sein kann, als die Arbeitsrichtung zwischen den beiden Schritten zu wechseln.

Weitere mögliche Eigenschaften, Schritte und Unterschritte des Verfahrens und deren Vorteile folgen aus der vorangehenden Beschreibung des Kraftfahrzeugs, auf die hiermit verwiesen wird, um Wiederholungen zu vermeiden.

Ausführungsformen der Erfindung werden anhand der Zeichnungen und der nachfolgenden Beschreibung näher erläutert. Es zeigen jeweils schematisch:
- Figur 1: eine Ausführungsform eines Kraftfahrzeugs nach der Erfindung;
- Figur 2: eine teilweise Schrägansicht einer Stirnwand in dem Kraftfahrzeug aus Figur 1 in einer ersten Ausführungsform;
- Figur 3: eine Querschnittsansicht der Stirnwand in dem Kraftfahrzeug aus Figur 1 in einer zweiten Ausführungsform;
- Figur 4: eine erste Ausführungsform des Verfahrens nach der Erfindung; und
- Figur 5: eine zweite Ausführungsform des Verfahrens nach der Erfindung.

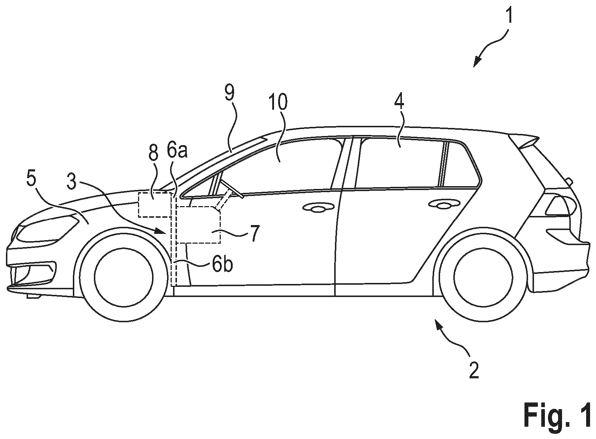

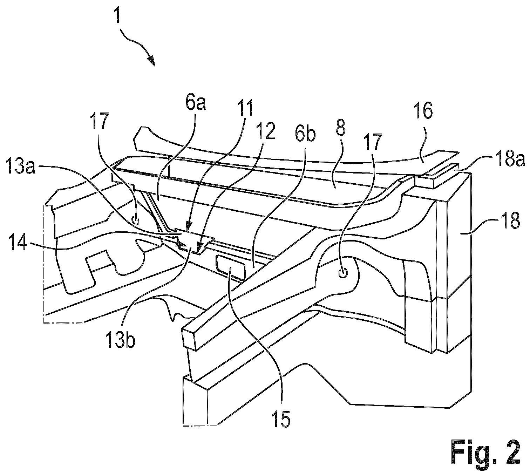

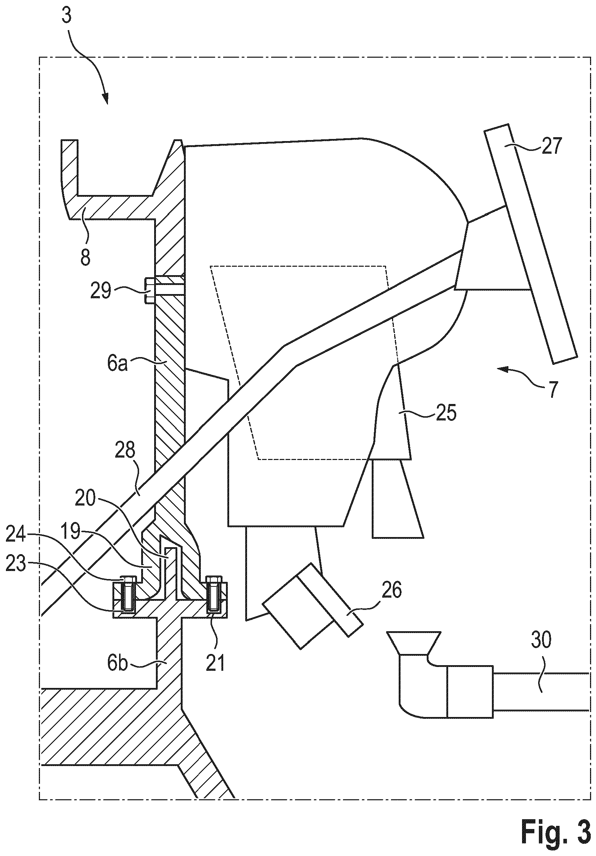

Fig. 1 zeigt ein Kraftfahrzeug 1 nach der Erfindung. Das Kraftfahrzeug 1 weist ein Fahrgestell 2 auf. Das Kraftfahrzeug 1 weist eine Stirnwand 3 auf. Die Darstellung der Stirnwand 3 in Fig. 1 ist rein schematisch, sie kann etwa wie in den Figuren 2 und 3 gezeigt weiter ausgestaltet sein. Merkmale der verschiedenen Ausführungsbeispiele können zum Bilden weiterer Ausführungsformen beliebig miteinander kombiniert sein, sofern sie sich nicht ausdrücklich widersprechen.

Die Stirnwand 3 begrenzt einen Fahrgastraum 4 des Kraftfahrzeugs 1 nach vorne. Sie stellt in Fig. 1 beispielhaft eine Trennwand zu einem Motorraum 5 des Kraftfahrzeugs 1 bereit. Es kann sich aber auch um eine Trennwand zu einem Kofferraum handeln, falls der Motorraum 5 in einem Heck des Kraftfahrzeugs 1 und nicht in einer Front, wie es hier beispielhaft der Fall ist, angeordnet ist. Die Stirnwand 3 umfasst mehrere Wandelemente 6a, 6b, hier beispielhaft ein erstes Wandelement 6a und ein zweites Wandelement 6b. Das erste Wandelement 6a trägt ein Cockpitmodul 7 für den Fahrgastraum 4. Zudem trägt das erste Wandelement 6a einen Wasserkasten 8 des Kraftfahrzeugs 1, der an einem unteren Ende einer Windschutzscheibe 9 angeordnet ist. Das zweite Wandelement 6b ist mit dem ersten Wandelement 6a verbunden. Hier ist das zweite Wandelement 6b beispielhaft einstückig mit dem Fahrgestell 2 des Kraftfahrzeugs 1 gebildet. Das erste Wandelelement 6a ist aus einer Richtung von oben, bezogen auf das Kraftfahrzeug 1, auf das zweite Wandelement 6b der Stirnwand 3 aufgestapelt. Das Kraftfahrzeug 1 weist einen vorderen Seitentürausschnitt 10 auf, wobei das erste Wandelement 6a, das das Cockpitmodul 7 trägt, derart bemessen ist, dass der vordere Seitentürausschnitt 10 ein Einbringen des ersten Wandelements 6a, das das Cockpitmodul 7 trägt, durch den vorderen Seitentürausschnitt 10 in den Fahrgastraum 4 beim Herstellen des Kraftfahrzeugs 1 verhindert. Daher ist in dieser Schrift vorgeschlagen, zum Herstellen des beispielhaft gezeigten Kraftfahrzeugs 1 auf ein Verfahren zurückzugreifen, das nicht erfordert, das erste Wandelement 6a, das das Cockpitmodul 7 trägt, durch den vorderen Seitentürausschnitt 10 in den Fahrgastraum 4 einzubringen.

Fig. 2 zeigt eine teilweise Schrägansicht der Stirnwand 3 in dem Kraftfahrzeug 1 aus Fig. 1 in einer ersten Ausführungsform. Das erste Wandelement 6a weist eine Unterkante 11 auf. Das zweite Wandelement 6b weist eine Oberkante 12 auf. Die Oberkante 12 und die Unterkante 11 liegen sich gegenüber. Somit sind das erste Wandelement 6a und das zweite Wandelement 6b horizontal getrennt. Die Unterkante 11 ist auf die Oberkante 12 aufgestapelt. Die Unterkante 11 und die Oberkante 12 weisen jeweils einen Ausschnitt 13a, 13b auf. Die Ausschnitte 13a, 13b sind zueinander ausgerichtet, sodass der Ausschnitt 13a der Unterkante 11 und der Ausschnitt 13b der Oberkante 12 zusammen eine Durchgangsöffnung 14 durch die Stirnwand 3 bereitstellen, die oberseitig durch das erste Wandelement 6a und unterseitig durch das zweite Wandelement 6b definiert ist. Die Durchgangsöffnung 14 ist hier trapezförmig ausgestaltet, dies ist aber rein beispielhaft. Durch die Durchgangsöffnung 14 hindurch kann zum Beispiel ein Kabel aus dem Motorraum 5 des Kraftfahrzeugs 1 in den Fahrgastraum 4 verlegt sein. Das Kabel kann vor dem Aufstapeln in dem Ausschnitt 13b des zweiten Wandelements 6b auf die Oberkante 12 gelegt werden. Wird das erste Wandelement 6a auf das zweite Wandelement 6b aufgestapelt, wird das Kabel in der gebildeten Durchgangsöffnung 14 durch das erste Wandelement 6a und das zweite Wandelement 6b radial umschlossen. So ist es nicht länger erforderlich, das Kabel nach dem Aufstapeln des ersten Wandelements 6a durch die Stirnwand 3 hindurch einzufädeln. Allerdings kann die Stirnwand 3 zusätzlich herkömmliche Fenster 15 aufweisen, die nur durch das erste Wandelement 6a oder das zweite Wandelement 6b hindurch und nicht zwischen diesen gebildet sind, wie hier anhand des Fensters 15 in dem zweiten Wandelement 6b veranschaulicht.

An dem Wasserkasten 8 ist eine Wasserfangleiste 16 montiert. Die Wasserfangleiste 16 ist dazu angeordnet, Wasser von der Windschutzscheibe 9 in den Wasserkasten 8 abzuleiten. Somit ist auch die Wasserfangleiste 16 durch das erste Wandelement 6a getragen. Die Stirnwand 3 aus Fig. 2 ist als Domstrebe für eine Federbeinaufnahme 17 des Kraftfahrzeugs 1 eingerichtet. Die Stirnwand 3 weist lateral je eine Federbeinaufnahme 17 auf. Weiter stellt die Stirnwand 3 eine Verstärkung von mindestens einer A-Säule 18 des Kraftfahrzeugs 1 bereit. Ein lateraler Endabschnitt des ersten Wandelements 6a ist um 90° abgewinkelt, um eine Stütze 18a bereitzustellen, die die A-Säule 18 lateral abstützt und somit deren laterale Steifigkeit erhöht. Die Stütze 18a weist eine Stufe auf, sodass die Stütze 18a aus der Richtung von oben betrachtet etwa Z-förmig gestaltet ist. Das erste Wandelement 6a ist somit mit der A-Säule 18 geschachtelt oder auch geometrisch verblockt. So können typische Crashbelastungen von der A-Säule 18 an die Stirnwand 3 und in die strukturgebenden Bauteile des Kraftfahrzeugs 1 weitergeleitet werden.

Fig. 3 zeigt eine schematische Querschnittsansicht durch die Stirnwand 3 aus Fig. 1 in einer zweiten Ausführungsform. Wie in Fig. 3 erkennbar ist, stellt das erste Wandelement 6a einen ersten Verbindungsabschnitt 19 bereit und stellt das zweite Wandelement 6b einen zweiten Verbindungsabschnitt 20 bereit. Der erste Verbindungsabschnitt 19 umgibt den zweiten Verbindungsabschnitt 20 ausgehend von dem ersten Wandelement 6a sandwichartig. Das heißt hier, der erste Verbindungsabschnitt 19 umgibt den zweiten Verbindungsabschnitt 20 aus der Richtung von oben. Der erste Verbindungsabschnitt 19 ist als Nut geformt. Der zweite Verbindungsabschnitt 20 weist eine Feder auf. Die Feder ist in die Nut aufgenommen. Der erste Verbindungsabschnitt 19 und der zweite Verbindungsabschnitt 20 bilden auf diese Weise eine Nut/Feder-Verbindung. Senkrecht zu der Feder weist der zweite Verbindungsabschnitt 20 einen Flansch 21 auf. Der Flansch 21 weist mehrere Schraubenaufnahmen 22 auf. Das erste Wandelement 6a weist in dem ersten Verbindungsabschnitt 19 Schraubendurchgangslöcher 23 auf. In den Schraubendurchgangslöchern 23 sind Schrauben 24 angeordnet. Köpfe der Schrauben 24 sind aus der Richtung von oben zugänglich. Die Schrauben 24 sind in den Schraubenaufnahmen 22 eingeschraubt und die Köpfe der Schrauben 24 drücken den ersten Verbindungsabschnitt 19 auf den Flansch 21. Somit sind das erste Wandelement 6a und das zweite Wandelement 6b aus der Richtung von oben miteinander verschraubt, also in Z-Richtung.

Wie in Fig. 3 gezeigt, weist das Cockpitmodul 7 ein Klimabauteil 25, eine Pedalbaugruppe 26, ein Lenkrad 27 und eine Lenkstange 28, die mit dem Lenkrad 27 verbunden ist, auf. Die Lenkstange 28 durchdringt die Stirnwand 3 durch die Durchgangsöffnung 14 in der Stirnwand 3 und wird so aus dem Fahrgastraum 4 geführt. Über eine Servicebefestigung 29 ist das Cockpitmodul 7 in X-Richtung von dem oberen, ersten Wandelement 6a lösbar. Die Servicebefestigung 29 ist hier als eine Schraube 24 ausgeführt, die zu einer nicht weiter gezeigten Vielzahl von Schrauben 24 gehört, mit der das Cockpitmodul 7 an dem ersten Wandelement 6a angebracht ist. Auf dem Fahrgestell 2 des Kraftfahrzeugs 1 kann eine Luftführung 30 nach hinten, in X-Richtung, bereitgestellt sein, wie in dem hier gezeigten Ausführungsbeispiel, die mit dem Klimabauteil 25 in Verbindung stehen kann. Der Wasserkasten 8 ist einstückig mit dem ersten Wandelement 6a gebildet. Anhand von Fig. 3 wird deutlich, dass das erste Wandelement 6a mit dem Cockpitmodul 7 und den weiteren vorstehend genannten Anbauten derart bemessen ist, dass der vordere Seitentürausschnitt 10 ein Einbringen und Ausbringen des ersten Wandelements 6a mit dem Cockpitmodul 7 und den weiteren Anbauten durch einen Manipulator verhindert, da der vordere Seitentürausschnitt 10 verglichen mit dem dafür notwendigen Arbeitsraum zu klein bemessen ist.

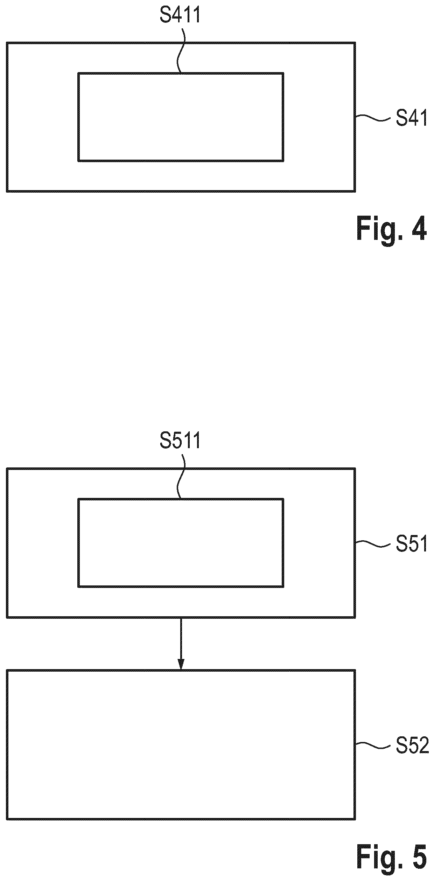

Fig. 4 zeigt eine erste Ausführungsform des Verfahrens nach der Erfindung. Es handelt sich um ein Verfahren zum Herstellen eines Kraftfahrzeugs 1, das in einem ersten Schritt S41 Montieren eines Cockpitmoduls 7 auf ein Fahrgestell 2 des Kraftfahrzeugs 1 umfasst. In einem Unterschritt S411 des Schritts S41 des Montierens erfolgt Aufstapeln eines ersten Wandelements 6a, das das Cockpitmodul 7 trägt, auf ein zweites Wandelement 6b, das auf einem Fahrgestell 2 des Kraftfahrzeugs 1 bereitgestellt ist, aus einer Richtung von oben, bezogen auf das Kraftfahrzeug 1, um eine Stirnwand 3 in dem Kraftfahrzeug 1 zu bilden, die den Fahrgastraum 4 des Kraftfahrzeugs nach vorne begrenzt. So kann das erste Wandelement 6a bequem in Z-Richtung auf dem Fahrgestell 2 abgesetzt und mit dem zweiten Wandelement 6b zusammengesetzt werden. Zum Beispiel haben Roboter in Montagestraßen üblicherweise eine große Tragkraft, sodass derartige Module separat von dem Fahrgestell 2 vorbereitet werden können und dann mit dem Fahrgestell 2 durch Aufstapeln zügig "verheiratet", also verbunden, werden können.

Das kann die Effizienz des Verfahrens deutlich erhöhen und den Zusammenbau eines Kraftfahrzeugs 1 beschleunigen.

Fig. 5 zeigt eine zweite Ausführungsform des Verfahrens nach der Erfindung. In einem ersten Schritt S51 erfolgt Montieren eines Cockpitmoduls 7 auf ein Fahrgestell 2 des Kraftfahrzeugs 1. In einem Unterschritt S511 des Schritts S51 des Montierens erfolgt wie in Fig. 4 Aufstapeln eines ersten Wandelements 6a, das das Cockpitmodul 7 trägt, auf ein zweites Wandelement 6b, das auf einem Fahrgestell 2 des Kraftfahrzeugs 1 bereitgestellt ist, aus einer Richtung von oben, bezogen auf das Kraftfahrzeug 1, um eine Stirnwand 3 in dem Kraftfahrzeug 1 zu bilden, die den Fahrgastraum 4 des Kraftfahrzeugs 1 nach vorne begrenzt. In einem Schritt S52, der auf den Schritt S51 des Montierens des Cockpitmoduls 7 auf das Fahrgestell 2 folgt, sieht das Verfahren den Schritt S52 eines Bereitstellens eines vorderen Seitentürausschnitts 10 des Kraftfahrzeugs 1 auf dem Fahrgestell 2 vor. Das bedeutet, eine Karosserie des Kraftfahrzeugs 1 wird erst nach dem Montieren des Cockpitmoduls 7 auf dem Fahrgestell 2 bereitgestellt. So kann die Karossiere das Cockpitmodul 7 nicht beim Aufstapeln des ersten Wandelements 6a auf das zweite Wandelement 6b behindern. Dies ermöglicht die Verwendung viel größerer Cockpitmodule 7 als bisher. Vor dem Bereitstellen in Schritt S52 kann, auch wenn es hier nicht gezeigt ist, ein Schritt eines Verschraubens des ersten Wandelements 6a mit dem zweiten Wandelement 6b aus der Richtung von oben, entlang der Z-Richtung, erfolgen. So kann das Aufstapeln und Verschrauben jeweils aus der Richtung von oben erfolgen, was das Verfahren effizienter machen kann, weil kein Wechsel der Arbeitsrichtung zwischen diesen Schritten stattfinden muss.

Die Stirnwand 3 ist in den Ausführungsbeispielen als Aluminiumgroßguss gefertigt. Hier sind beispielhaft sowohl das erste Wandelement 6a als auch das zweite Wandelement 6b als Aluminiumgroßguss gefertigt. In nicht gezeigten Ausführungsformen kann aber auch nur eines von beiden als Aluminiumgroßguss gefertigt sein, wie etwa das erste Wandelement 6a. Das erste Wandelement 6a und das zweite Wandelement 6b sind in einigen nicht gezeigten Ausführungsformen in beliebiger Kombination auch jeweils als eines von einem Aluminiumgroßguss, einem Stahlblech und einem Kunststoff/Blech-Hybrid gefertigt.

Wie gezeigt, ermöglicht die Erfindung das Bereitstellen eines Großgusses mit geteilter Stirnwand 3 bzw. Spritzwand in einem Vorderwagen eines Kraftfahrzeugs 1. Eine Nutzung des oberen Teils, also des ersten Wandelements 6a, der Stirnwand 3 als Träger für das Cockpitmodul 7 ist vorgesehen. Es kann eine Trennung der Stirnwand 3 unter anderem durch die Durchgangsöffnungen 14 für diverse Komponenten bereitgestellt sein, die üblicherweise durch die Stirnwand 3 hindurchgeführt werden müssen. Ein Einfädeln dieser Komponenten nach dem Einbau der Stirnwand 3 durch das Fenster 15 in der Stirnwand 3, wie aus dem Stand der Technik bekannt, kann somit entfallen. Eine Erweiterung des Cockpitmoduls 7 um Komponenten, die nicht durch den X-Flansch passen, ist ermöglicht. Ebenso kann ein (Teil-) Ersatz des Modulquerträgers im heutigen Cockpit des Kraftfahrzeugs 1 durch ein Großguss-Stirnwandoberteil, als Ausführungsform des ersten Wandelements 6a, erfolgen. Es kann eine Montagerichtung in Z-Richtung nach unten und eine Demontagerichtung in X-Richtung nach hinten für das Cockpitmodul 7 vorgesehen sein. Das Cockpitmodul 7 kann zur Demontage an geeigneten Befestigungsstellen, wie etwa der Servicebefestigung 29, aufgetrennt werden und kann in Teilen aus dem Kraftfahrzeug 1 wieder ausgebaut werden, und zwar insbesondere durch den X-Flansch, wie etwa den vorderen Seitentürausschnitt 10, hindurch.

### Bezugszeichenliste

- 1: Kraftfahrzeug
- 2: Fahrgestell
- 3: Stirnwand
- 4: Fahrgastraum
- 5: Motorraum
- 6a, b: Wandelement
- 7: Cockpitmodul
- 8: Wasserkasten
- 9: Windschutzscheibe
- 10: vorderer Seitentürausschnitt
- 11: Unterkante
- 12: Oberkante
- 13a, b: Ausschnitt
- 14: Durchgangsöffnung
- 15: Fenster
- 16: Wasserfangleiste
- 17: Federbeinaufnahme
- 18: A-Säule
- 18a: Stütze
- 19: erster Verbindungsabschnitt
- 20: zweiter Verbindungsabschnitt
- 21: Flansch
- 22: Schraubenaufnahme
- 23: Schraubendurchgangsloch
- 24: Schraube
- 25: Klimabauteil
- 26: Pedalbaugruppe
- 27: Lenkrad
- 28: Lenkstange
- 29: Servicebefestigung
- 30: Luftführung

- S41, S411: Verfahrensschritte
- S51, S511, S52: Verfahrensschritte

## Patentansprüche

1. Kraftfahrzeug (1), das eine Stirnwand (3) aufweist, die einen Fahrgastraum (4) nach vorne begrenzt, wobei die Stirnwand (3) mehrere Wandelemente (6a, 6b) umfasst, wobei ein erstes Wandelement (6a) ein Cockpitmodul (7) für den Fahrgastraum (4) trägt und ein zweites Wandelement (6b) mit dem ersten Wandelement (6a) verbunden ist, **dadurch gekennzeichnet,**
**dass** das erste Wandelement (6a) aus einer Richtung von oben, bezogen auf das Kraftfahrzeug (1), auf das zweite Wandelement (6b) der Stirnwand (3) aufgestapelt ist.

2. Kraftfahrzeug (1) nach Anspruch 1,
**dadurch gekennzeichnet,**
**dass** das Kraftfahrzeug (1) mindestens einen vorderen Seitentürausschnitt (10) aufweist, wobei das erste Wandelement (6a), das das Cockpitmodul (7) trägt, derart bemessen ist, dass der vordere Seitentürausschnitt (10) ein Einbringen des ersten Wandelements (6a), das das Cockpitmodul (7) trägt, durch den vorderen Seitentürausschnitt (10) in den Fahrgastraum (4) beim Herstellen des Kraftfahrzeugs (1) verhindert.

3. Kraftfahrzeug (1) nach Anspruch 1 oder 2,
**dadurch gekennzeichnet,**
**dass** das erste Wandelement (6a) eine Unterkante (11) aufweist und das zweite Wandelement (6b) eine Oberkante (12) aufweist und die Unterkante (11) und die Oberkante (12) jeweils einen oder mehrere Ausschnitte (13a, 13b) aufweisen, die jeweils zueinander ausgerichtet sind, sodass die Ausschnitte (13a) der Unterkante (11) und die Ausschnitte (13b) der Oberkante (12) zusammen Durchgangsöffnungen (14) durch die Stirnwand (3) bereitstellen, die oberseitig durch das erste Wandelement (6a) und unterseitig durch das zweite Wandelement (6b) definiert sind.

4. Kraftfahrzeug (1) nach einem der vorstehenden Ansprüche,
**dadurch gekennzeichnet,**
das erste Wandelement (6a) einen ersten Verbindungsabschnitt (19) bereitstellt und das zweite Wandelement (6b) einen zweiten Verbindungsabschnitt (20) bereitstellt und der erste Verbindungsabschnitt (19) den zweiten Verbindungsabschnitt (20) ausgehend von dem ersten Wandelement (6a) sandwichartig umgibt.

5. Kraftfahrzeug (1) nach einem der vorstehenden Ansprüche,
**dadurch gekennzeichnet,**
**dass** das erste Wandelement (6a) und das zweite Wandelement (6b) aus der Richtung von oben miteinander verschraubt sind.

6. Kraftfahrzeug (1) nach einem der vorstehenden Ansprüche,
**dadurch gekennzeichnet,**
**dass** die Stirnwand (3) als Domstrebe für eine oder mehrere Federbeinaufnahmen (17) des Kraftfahrzeugs (1) eingerichtet ist.

7. Kraftfahrzeug (1) nach einem der vorstehenden Ansprüche,
**dadurch gekennzeichnet,**
**dass** die Stirnwand (3) eine Verstärkung von mindestens einer A-Säule (18) des Kraftfahrzeugs (1) bereitstellt.

8. Kraftfahrzeug (1) nach einem der vorstehenden Ansprüche,
**dadurch gekennzeichnet,**
**dass** die Stirnwand (3) als Aluminiumgroßguss gefertigt ist.

9. Verfahren zum Herstellen eines Kraftfahrzeugs (1), insbesondere eines Kraftfahrzeugs (1) nach einem der vorstehenden Ansprüche, umfassend den Schritt:
- Montieren (S41, S51) eines Cockpitmoduls (7) auf ein Fahrgestell (2) des Kraftfahrzeugs (1),
**dadurch gekennzeichnet,**
**dass** der Schritt des Montierens (S41, S51) den folgenden Unterschritt umfasst:
- Aufstapeln (S411, S511) eines ersten Wandelements (6a), das das Cockpitmodul (7) trägt, auf ein zweites Wandelement (6b), das auf dem Fahrgestell (2) des Kraftfahrzeugs (1) bereitgestellt ist, aus einer Richtung von oben, bezogen auf das Kraftfahrzeug (1), um eine Stirnwand (3) in dem Kraftfahrzeug (1) zu bilden, die den Fahrgastraum (4) des Kraftfahrzeugs (1) nach vorne begrenzt.

10. Verfahren nach Anspruch 9,
**dadurch gekennzeichnet,**
**dass** das Verfahren nach dem Schritt des Montierens (S41, S51) des Cockpitmoduls (7) den folgenden Schritt umfasst:
- Bereitstellen (S52) eines vorderen Seitentürausschnitts (10) des Kraftfahrzeugs (1) auf dem Fahrgestell (2).
